# EUROPÄISCHE PATENTANMELDUNG

(11) **EP 2 208 521 A2**
(43) Veröffentlichungstag der Anmeldung: **21.07.2010**
(21) Anmeldenummer: 10000340.9
(22) Anmeldetag: 15.01.2010
(51) Int. Cl.: B01D 53/14, B01D 53/84, C02F 3/00

(54) **Anordnung und Verfahren zur Behandlung von Rauchwasser**

(30) Priorität: 15.01.2009 DE 102009005176; 27.01.2009 DE 102009006238
(71) Anmelder: Universität Duisburg-Essen, 45141 Essen (DE); Schröter Technologie GmbH & Co. KG, 33829 Borgholzhausen (DE)
(72) Erfinder: Franke, Hilmar, 49565 Bramsche (DE); Werneke, Reza, 33615 Bielefeld (DE)
(74) Vertreter: Gesthuysen, von Rohr & Eggert

(57) **Zusammenfassung**

Es werden eine Anordnung und ein Verfahren zur Behandlung von Rauchgas sowie Verwendungen von Algen vorgeschlagen. In das Rauchgas (20) wird eine Algensuspension mit lebenden Algen eingesprüht und durch einen Bioreaktor (2) zirkuliert. In dem Bioreaktor erfolgt unter Einwirkung von Licht (2) eine Fotosynthese, wobei insbesondere höherwertige Kohlenwasserstoffe und/oder geruchsbelästigende Stoffe abgebaut werden.

## Beschreibung

Die vorliegende Erfindung betrifft eine Anordnung und ein Verfahren zur Behandlung von belasteter Abluft, wie Rauchgas, sowie die Verwendung von Algen zur Behandlung von belasteter Abluft, wie Rauchgas, oder Gülle.

Belastete Abluft bzw. Rohgas, wie Rauchgas, entsteht beispielsweise bei der Verbrennung von Biomasse, Holz oder sonstiger fossiler Brennstoffe, insbesondere in Kohlekraftwerken. Das Rauchgas enthält neben Kohlendioxid auch geruchsbelästigende Stoffe und/oder höherwertige Kohlenwasserstoffe (Verbindungen, die mehr C-Atome als Kohlendioxid, insbesondere mehr als fünf oder zehn C-Atome, und/oder Fremdatome, insbesondere Stickstoff, Schwefel und/oder (zusätzlichen) Sauerstoff, enthalten).

Das Rauchgas wird üblicherweise durch Einsprühen von Wasser in einem sogenannten Rauchgaswäscher (teilweise) gereinigt, Das vom Rauchgaswäscher abgegebene Wasser (hier auch kurz als "Rauchwasser" bezeichnet) ist sehr stark mit geruchsbelästigenden Stoffen und kohlenstoffhaltigen Verbindungen, insbesondere auch höherwertigen Kohlenwasserstoffen, belastet und wird üblicherweise speziell nachbehandelt.

Alternativ wird Rauchgas zur Zeit einer thermischen Nachverbrennung (TNV) zugeführt. Dies erfordert jedoch eine beträchtliche Menge an Primärenergie, welche kostenaufwendig ist und darüber hinaus die Emission von CO₂ erhöht. Ziel dieser Entwicklung ist, eine derartige thermische Nachverbrennung (TNV) zu vermeiden.

Unabhängig von der Rauchgaswäsche sind Anordnungen zur Behandlung von Rauchgas durch biologischen Abbau bekannt, beispielsweise aus der DE 10 2007 050 484 A1 und der DE 20 2008 004 029 U1. Bei den bekannten Anordnungen wird das Rauchgas gasförmig in eine Algensuspension eingeleitet, die beleuchtet wird. Es ist jedoch verhältnismäßig aufwendig, auf diese Weise große Mengen von Rauchgas durchzuleiten und biologisch abzubauen. Dies liegt insbesondere daran, daß das Rauchgas zusätzlich zu den primär abzubauenden Bestandteilen, wie den geruchsbelästigenden Stoffen und den höherwertigen Kohlenwasserstoffen, eben auch eine große Menge an Kohlendioxid enthält, die entsprechend mit transportiert, durchgeleitet und ggf. sogar von der Algensuspension aufgenommen werden muß.

Bei der vorliegenden Erfindung geht es insbesondere darum, höherwertige Kohlenwasserstoffe und/oder geruchsbelästigende Stoffe, die insbesondere auch durch höherwertige Kohlenwasserstoffe gebildet sein können, zu reduzieren, abzubauen und/oder zu binden. Entsprechendes gilt für Behandlung von Gülle, um die Geruchsbelastung durch Gülle zu minimieren oder gar zu vermeiden.

Der vorliegen Erfindung liegt der Aufgabe zugrunde, eine Anordnung und ein Verfahren zur Behandlung von Rauchgas oder sonstiger belastender Abluft sowie Verwendungen von Algen anzugeben, wobei eine thermische Nachbehandlung von Rauchgas oder sonstiger belastender Abluft bei Verwendung eines Rauchgaswäschers vermieden werden kann und/oder wobei auf einfache, kostengünstige und/oder besonders effiziente Weise geruchsbelästigende Stoffe und/oder höherwertige Kohlenwasserstoffe im Rohgas bzw. Rauchgas, Rauchwasser oder Gülle behandelt, insbesondere reduziert, gebunden und/oder biologisch abgebaut, werden können.

Die obige Aufgabe wird durch eine Anordnung gemäß Anspruch 1 oder ein Verfahren gemäß Anspruch 9 oder eine Verwendung gemäß Anspruch 12 oder 15 gelöst. Vorteilhafte Weiterbildungen sind Gegenstand der Unteransprüche.

Ein erster Aspekt der vorliegenden Erfindung liegt darin, einen Rauchgaskondensator und/oder einen Rauchgaswäscher zum Einsprühen von Wasser in das Rauchgas und/oder Durchleiten von Rauchgas durch Wasser mit einer Einrichtung zum biologischen Abbau von kohlenstoffhaltigen Verbindungen und/oder geruchsbelästigenden Stoffen aus dem vom Rauchgaswäscher abgegeben Wasser (Rauchwasser) zu kombinieren. Dies gestattet auf überraschend einfache, kostengünstige und/oder effiziente Weise eine Behandlung des Rauchgases bzw. Rauchwassers.

Gemäß einem zweiten Aspekt der Erfindung wird eine Algensuspension mit lebenden Algen in das Rauchgas eingesprüht. Dies gestattet auf überraschend einfache, kostengünstige und/oder effiziente Weise eine Behandlung des Rauchgases bzw. Rauchwassers.

Ein dritter Aspekt der vorliegenden Erfindung liegt darin, Rauchgaskondensat und/oder Rauchwasser mittels Algen unter Einwirkung von Licht biologisch zu reinigen und/oder eine Algensuspension in das Rauchgas einzusprühen, um kohlenstoffhaltige Verbindungen und/oder geruchsbelästigende Stoffe biologisch abzubauen. Dies gestattet auf überraschend einfache, kostengünstige und/oder effiziente Weise eine Behandlung des Rauchgases bzw. Rauchwassers.

Gemäß einem vierten Aspekt der vorliegenden Erfindung werden Algen zum biologischen Abbau von geruchsbelästigenden Stoffen in Gülle verwendet, wobei die Gülle mittels Algen unter Einwirkung von Licht biologisch gereinigt wird und/oder geruchsbelästigende Stoffe in der Gülle mittels Algen unter Einwirkung von Licht biologisch abgebaut werden. Dies gestattet auf überraschend einfache, kostengünstige und/oder effiziente Weise eine Behandlung von Gülle, insbesondere zur Minimierung oder Vermeidung von Geruchsbelästigungen.

Die vorgenannten Aspekte können unabhängig voneinander realisiert oder beliebig miteinander kombiniert werden.

Weitere Aspekte, Vorteile und Merkmale und Eigenschaften der vorliegenden Erfindung ergeben sich aus den Ansprüchen und der nachfolgenden Beschreibung bevorzugter Ausführungsformen anhand der Zeichnung. Es zeigen:
- Fig. 1: eine schematische Darstellung einer vorschlagsgemäßen Anordnung zur Behandlung von Rauchgas;
- Fig. 2: eine schematische Darstellung einer Einrichtung zum biologischen Abbau von kohlenstoffhaltigen Verbindungen; und
- Fig. 3: eine schematische Darstellung einer weiteren vorschlagsgemäßen Anordnung zur Behandlung von Rauchgas.

In den Figuren werden für gleiche oder ähnliche Komponenten, Bauteile u. dgl. die gleichen Bezugszeichen verwendet. Insbesondere ergeben sich entsprechende oder vergleichbare Vorteile, auch wenn eine wiederholte Beschreibung weggelassen ist.

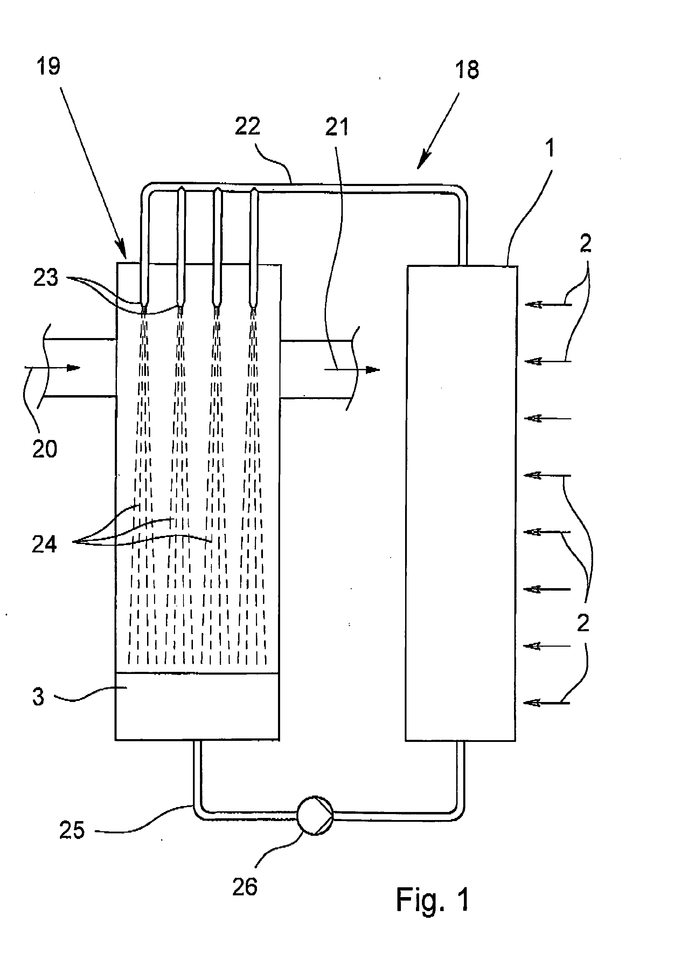

Fig. 1 zeigt in einer schematischen, nicht maßstabsgerechten Darstellung eine vorschlagsgemäße Anordnung 18 zur Behandlung von Rauchgas, das durch Pfeil 20 angedeutet ist.

Die Anordnung 18 weist vorzugsweise einen Rauchgaswäscher 19 zum Einsprühen oder Eindüsen von Wasser 3 in das Rauchgas 20 sowie eine Einrichtung 1 zum biologischen Abbau von kohlenstoffhaltigen Verbindungen und/oder geruchsbelästigenden Stoffen aus dem vom Rauchgaswäscher 19 abgebenden Wasser 3 (Rauchwasser) auf.

Die Einrichtung 1 enthält mindestens eine biologisch aktive Spezies, insbesondere Algen.

Der Abbau von kohlenstoffhaltigen Verbindungen, insbesondere der höherwertigen Kohlenwasserstoffe im eingangs genannten Sinne, und/oder von geruchsbelästigenden Stoffen erfolgt insbesondere unter Einwirkung von Licht 2 in der Einrichtung 1.

Die Anordnung 18 ist vorzugsweise derart ausgebildet, daß das Wasser 3 durch den Rauchgaswäscher 19 und die Einrichtung 1 in einen Kreislauf zirkulierbar ist.

Das von der Einrichtung 1 gereinigte Wasser 3 wird beim Darstehungsbeispiel über eine Zuleitung 22 dem Rauchgaswäscher 19 zugeführt, insbesondere über Düsen 23 in das Rauchgas 20 eingedüst. Vorzugsweise werden Wassernebel 24 in dem Rauchgas 20 bzw. in dem Rauchgaswäscher 19 erzeugt, die zumindest primär die höherwertigen Kohlenwasserstoffe und/oder geruchsbelästigenden Stoffe aus dem Rauchgas 20 aufnehmen. Das gereinigte Rauchgas 20 wird dann als Abluft, wie durch Pfeil 21 angedeutet, abgegeben.

Das verunreinigte Wasser 3 (Rauchwasser) wird aus dem Rauchgaswäscher 19 beim Darstellungsbeispiel über eine Ableitung 25 und insbesondere über eine optionale Pumpe 26 wieder der Einrichtung 1 zugeführt.

Bedarfsweise weist die Anordnung 18 auch oder nur in der Zuleitung 22 eine nicht dargestellte Pumpe auf, insbesondere um das gewünschte Einsprühen des Wassers 3 über die Düsen 23 und/oder in Form von Nebeln 24 zu ermöglichen. Jedoch sind auch andere konstruktive Lösungen möglich.

Besonders bevorzugt erfolgt das Einsprühen des Wassers 3 zusammen mit einer biologisch aktiven, lebenden Spezies, insbesondere Algen, bzw. in Form einer Algensuspension in das zu reinigende Rauchgas 20. Insbesondere wird das Wasser 3 zusammen mit der lebende Spezies bzw. die Algensuspension sogar zirkuliert, wobei die Zirkulation in einem Kreislauf wie in Fig. 1 dargestellt durch die Einrichtung 1 und den Rauchgaswäscher 19 erfolgen kann.

Zusätzlich oder alternativ kann auch eine Zirkulation des Wassers 3 zusammen mit der biologisch aktiven Spezies bzw. der Algensuspension nur im Rauchgaswäscher 19 bzw. ein mehrmaliges Eindüsen oder Einsprühen erfolgen, insbesondere bevor eine Weiterleitung an die Einrichtung 1 erfolgt.

Gemäß einer weiteren Alternative kann das Rauchwasser 3 auch ohne lebende Spezies durch den Rauchgaswäscher 19 zirkuliert werden und immer ein Teil davon in einen separaten, durch die Einrichtung 1 führenden Kreislauf mit der lebenden Spezies bzw. Algensuspension abgezweigt werden.

Versuche haben gezeigt, daß insbesondere eine Algensuspension die in dem Rauchgaswäscher 19 üblicherweise herrschenden, hohen Temperaturen überraschend problemlos übersteht, die Algen also nicht abgetötet werden.

Weiter hat sich gezeigt, daß insbesondere bei Verwendung einer Algensuspension eine bessere Reinigung des Rauchgases 20 bzw. eine effektivere Abtrennung von höheren Kohlenwasserstoffen und/oder geruchsbelästigenden Stoffen aus dem Rauchgas 20 erfolgt. Insbesondere ist die Reinigungswirkung derartig gut, daß bei der Abluft 21 bzw, dem gereinigten Rauchgas auf eine Nachreinigung, insbesondere eine Nachverbrennung, verzichtet werden kann.

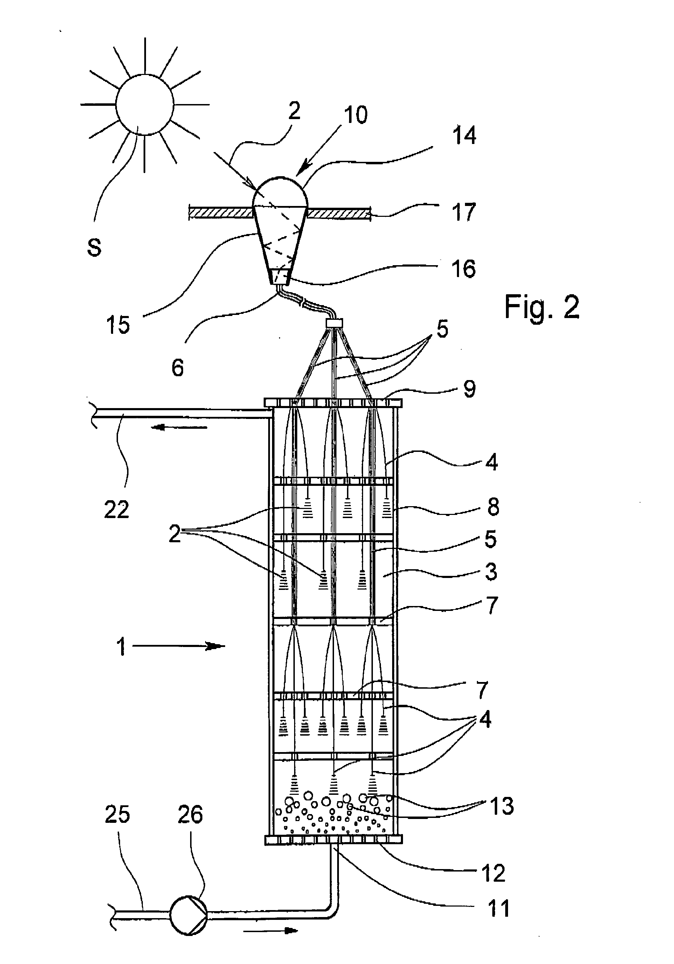

Nachfolgend wird ein bevorzugter Aufbau der Einrichtung 1 anhand der nur schematischen, nicht maßstabsgerechten Darstellung gemäß Fig. 2 erläutert.

Die Einrichtung 1 stellt insbesondere einen foto-optisch arbeitenden Bioreaktor dar. Die Einrichtung 1 weist vorzugsweise Mittel zum Sammeln von Licht 2, insbesondere von der Sonne S, und/oder vorzugsweise zur dreidimensionalen Verteilung von Licht 2 in dem Wasser bzw. flüssigen Medium 3 (hier der Algensuspension) auf.

Bei dem Medium 3 handelt es sich insbesondere um eine Suspension oder dergleichen. Dementsprechend ist der Begriff "flüssig" in einem weiten Sinne zu verstehen, so daß insbesondere Suspensionen, Dispersionen oder sonstige Gemische oder Stoffe mit flüssigen Phasen oder Anteilen umfaßt sind.

Das Medium 3 ist vorzugsweise photoaktiv und/oder biologisch aktiv. Insbesondere kann in dem Medium 3 eine Photosynthese oder eine sonstige Licht 2 benötigende Reaktion ablaufen. Insbesondere enthält das Medium 3 hierzu eine biologisch aktive Spezies, insbesondere Algen, sonstige Bakterien oder dergleichen.

Insbesondere ist das Medium 3 wäßrig bzw. enthält Wasser und/oder stark lichtbestreuend.

Besonders bevorzugt wird eine Algensuspension als Medium 3 eingesetzt. Insbesondere enthält das Medium 3 eine Algenmischkultur, die vorzugsweise zumindest in ähnlicher Form in Flüssen, Teichen oder dergleichen vorkommt. Derartige Mischkulturen sind nämlich besonders resistent gegen Umwelteinflüsse, Krankheiten und/oder sonstige Störungen.

Da die Einrichtung 1 vorzugsweise mit Algen bzw, mit einer Algensuspension als Medium 3 eingesetzt wird, wird der folgenden Beschreibung primär auf das durch das eingeleitete Licht 2 induzierte Algenwachstum abgestellt. Jedoch gelten diese Ausführungen entsprechend auch für sonstige Spezies oder photo- bzw. bioaktive Medien 3.

Die Einrichtung 1 bzw. Mittel zur Zu- oder Einleitung von Licht 2 weist bzw. weisen vorzugsweise lichtleitende Fasern 4 (insbesondere Glasfasern oder Acrylfasern) auf. Vorzugsweise enden mehrere oder alle Fasern 4 in verschiedenen Raumbereichen, insbesondere zumindest teilweise in unterschiedlichen Tiefen und/oder Vertikalebenen, in dem Medium 3. Dies gestattet eine dreidimensionale Verteilung des Lichts 2 in dem Medium 3, wie in der Figur beispielhaft, nur schematisch angedeutet.

Besonders bevorzugt enden die Fasern 4 in verschiedenen Ebenen innerhalb des Mediums 3. Jedoch können die Fasern 4 auch alle unterschiedlich oder unregelmäßig enden.

Ausgehend von einem Bündel (Hauptbündel) 5 von Fasern 4 erfolgt insbesondere eine Verzweigung oder Verästelung in Einzelbündel 6 und/oder Einzelfasern 4, wie in Fig. 2 beispielhaft angedeutet. Um eine optimale Verteilung des Lichts 2 in dem Medium 3 zu erreichen, enden die Fasern 4 vorzugsweise einzeln, also separat voneinander in dem Medium 3. Jedoch können auch mehrere Fasern 4 zusammen, beispielsweise als Einzelbündel 5, in dem Medium 3 enden.

Das Licht tritt zumindest im wesentlichen oder ausschließlich am Ende der jeweiligen Faser 4 aus und beleuchtet das Medium 3 im jeweiligen Raumbereich, wie durch Striche in Fig. 2 angedeutet.

Je nach Biegung bzw. Krümmung, Material, Oberfläche, Oberflächenaufrauhung oder dergleichen können die Fasern 4 auch mehr oder weniger Licht seitlich entlang der jeweiligen Faser 4 abgeben. Auch so kann eine optimierte dreidimensionale Verteilung von Licht 2 in dem Medium 3 erfolgen. Bei entsprechender Ausgestaltung der Fasern 4 ist es sogar möglich, daß zumindest im wesentlichen das Gesamtlicht bereits über die im Medium 3 verlaufenden Längen der jeweiligen Faser 4 seitlich abgegeben wird und gegebenenfalls nur noch ein verhältnismäßig geringer Anteil am Ende der jeweiligen Faser 4 in das Medium 3 abgestrahlt wird. In diesem Fall verlaufen die Fasern 4 vorzugsweise im wesentlichen über längere Strecken parallel zueinander oder beispielsweise gewendelt oder mäanderförmig durch das Medium 3 und können gegebenenfalls sogar alle in einer Ebene oder Tiefe in dem Medium 3 enden.

Versuche haben gezeigt, daß die Lichtaustrittsflächen - insbesondere also die Enden - der Fasern 4 von den Algen nicht besiedelt werden. Dementsprechend ist keine übermäßige Reinigung oder Befreiung von Algen erforderlich. Vielmehr ergibt sich ein selbstorganisierendes System, das möglichst effizient das eingeleitete Licht 2 zum Algenwachstum ausnutzt.

Die Fasern 4 können lose in das Medium 3 eintauchen bzw. in dieses hineinhängen, gegebenenfalls auch als Bündel 5 oder 6, die sich dann insbesondere verzweigen.

Vorzugsweise weist die Einrichtung 1 insbesondere gitter- oder stangenartige Halterungen 7 in dem Medium 3 auf, die insbesondere in verschiedenen Ebenen oder Tiefen angeordnet sind, um die Fasern 4 bzw. Bündel 5, 6 zu halten oder zu führen.

Besonders bevorzugt bilden die Halterungen 7 Zwischenböden in einem Behälter oder Tank 8 mit dem Medium 3, um die Fasern 4 oder Bündel 5 oder 6 in verschiedenen Raumbereichen innerhalb des Mediums 3 enden zu lassen.

Bedarfsweise können die Fasern 4 bzw. Bündel 5, 6 zumindest in Endbereichen im Medium 3, insbesondere durch eine Strömung des Mediums 3, beweglich sein.

Die Zuführung oder Einleitung der Fasern 4 bzw. Bündel 5/6 erfolgt vorzugsweise von oben, beim Ausführungsbeispiel durch eine obere Halterung oder Abdeckung 9 oder dergleichen.

Die Fasern 4 bzw. Bündel 5/6 erstrecken sich vorzugsweise zumindest im wesentlichen vertikal von oben nach unten im Medium 3. Dies ist insbesondere dann vorteilhaft, wenn die Dichte der Fasern 4 größer als die Dichte des Mediums 3 ist, diese also nicht aufschwimmen.

Jedoch ist es grundsätzlich auch möglich, daß sich die Fasern 4 bzw. Bündel 5/6 von unten nach oben in das Medium 3 und/oder auf sonstige Weise - beispielsweise quer - in das Medium 3 erstrecken oder zumindest abschnittsweise derart geführt sind.

Die Fasern 4 bestehen vorzugsweise aus Kunststoff, Glas oder einem sonstigen zur Lichtleitung geeigneten Material oder Aufbau. Insbesondere können auch Verbundwerkstoffe oder Verbundaufbauten, beispielsweise mit Beschichtungen, verwendet werden.

Alternativ - also auch unabhängig - oder zusätzlich zu der dreidimensionalen Verteilung des Lichts 2 im Medium 3 durch die Fasern 4 gestatten die Fasern 4 bzw. Bündel 5/6 eine optimierte Zuführung des Lichts 2.

Beim Darstellungsbeispiel wird vorzugsweise Sonnenlicht 2 zur Beleuchtung des Mediums 3 bzw, der Algen eingesetzt, auch wenn grundsätzlich jedes sonstige Licht verwendet werden kann. In diesem Zusammenhang ist anzumerken, daß der Begriff "Licht" vorzugsweise in einem weiten Sinne dahingehend zu verstehen ist, daß nicht nur sichtbares Licht, sondern beispielsweise alternativ oder zusätzlich auch Infrarot-Licht und/oder ultraviolettes Licht entsprechend dem Medium 3 zugeführt werden kann. Generell kann die Energiezuführung über die Fasern 4 des Medium 3 auch anderen Zwecken als der beim Darstellungsbeispiel vorgesehenen Photosynthese und/oder Anregung des biologischen Wachstums und/oder der Umwandlung von Kohlendioxid in Biomasse dienen.

Die Einrichtung 1 weist eine Sammeleinrichtung 10 zum Auffangen von Licht 2, insbesondere Sonnenlicht, auf, wie schematisch dargestellt. Das aufgefangene Sonnenlicht oder sonstiges Licht von einer sonstigen Beleuchtungseinrichtung kann dann über die Fasern 4 bzw. insbesondere ein Bündel 5 oder 6 zu dem Behälter bzw. Tank 8 mit dem Medium 3 mit insbesondere sehr geringen Verlusten geleitet werden. Insbesondere sind so Zuleitungen von mehreren 100 m möglich. Dies ist insbesondere bei großem Lichtbedarf sehr vorteilhaft, da entsprechend große Flächen, Lichtsammeleinrichtungen oder dergleichen erforderlich sind und/oder entsprechende bauliche Gegebenheiten berücksichtigt werden müssen und/oder können. Insbesondere ist es so möglich, den Behälter bzw. Tank 8 mit dem Medium 3 in einem nicht dargestellten Gebäude oder dergleichen unterzubringen und beispielsweise trotzdem Sonnenlicht zur Beleuchtung einzusetzen.

Die Sammeleinrichtung 10 weist beim Darstellungsbeispiel eine kalottenartige Abdeckung oder Kuppel 14, einen konischen oder trichterförmigen Sammler 15 und/oder einen Koppler 16 zum Anschluß der Fasern 4 und/oder zur Verteilung des Lichts 2 in die Fasern 4 auf. Insbesondere bilden der Sammler 1 und der Koppler 16 oder alle Komponenten eine Baueinheit.

Die Kuppel 14 ist vorzugsweise an oder auf einem Dach 17, insbesondere eines Gebäudes, angeordnet, wie in der Figur 2 angedeutet. Jedoch sind auch andere Einrichtungen möglich.

Besonders bevorzugt erfolgt eine Ausrichtung der Sammeleinrichtung 10 bzw. der Kuppel 14 zu einem mittleren Sonnenstand hin. Jedoch ist es grundsätzlich auch möglich, die Sammeleinrichtung 10 vertikal oder senkrecht zur Dachneigung auszurichten und/oder die Kuppel 14 flach an oder auf dem Dach 17 anzuordnen.

Die Kuppel 14 ist vorzugsweise halbkugelförmig ausgebildet. Sie weist insbesondere einen Durchmesser von etwa 20 bis 100 cm, besonders bevorzugt etwa 25 bis 50 cm, auf.

Die Kuppel 14 ist vorzugsweise von innen reflektierend ausgebildet.

Die Kuppel 14 ist vorzugsweise hochgradig lichtdurchlässig ausgebildet und weist insbesondere ein Transmissionsgrad größer als 99 % auf.

Vorzugsweise ist die Kuppel 14 aus transparentem Kunststoff hergestellt.

Der Sammler 15 weist vorzugsweise einen Eintrittsdurchmesser von etwa 20 bis 100 cm, insbesondere etwa 25 bis 50 cm, auf. Er weist vorzugsweise austrittsseitig einen Durchmesser von etwa 3 bis 15 cm, insbesondere etwa 5 bis 10 cm, auf.

Der Lichtweg im Sammler 15 von der Lichteintrittsseite zur Lichtaustrittsseite bzw. zum Koppler 16 hin ist vorzugsweise verjüngt, insbesondere mit einem Winkel von höchstens 30°, besonders bevorzugt höchstens 20° und insbesondere im wesentlichen 10°.

Der Sammler 15 ist vorzugsweise zumindest im wesentlichen aus Blech hergestellt. Jedoch kann grundsätzlich auch jedes sonstige geeignete Material eingesetzt werden.

Der Sammler 15 ist innen hochgradig reflektierend ausgebildet und weist insbesondere einen Reflektionsgrad größer als 99 % auf.

Vorzugsweise ist der Sammler 15 innen mit einer reflektierenden Beschichtung oder Folie versehen.

Der Koppler 16 ist insbesondere als Sternkoppler ausgebildet. Die Fasern 4 sind vorzugsweise unmittelbar an den Koppler 16 angeschlossen, insbesondere daran angeschmolzen.

Der Koppler 16 verschließt den Sammler 15 vorzugsweise austrittsseitig und/oder schließt sich austrittsseitig an den Sammler 15 an.

Der Koppler 16 ist vorzugsweise kegelförmig oder kegelstumpfförmig ausgebildet und/oder innen in den Sammler 15 eingesetzt.

Der Koppler 16 besteht vorzugsweise aus hochgradig transparentem Material, insbesondere Acrylglas.

In dem Koppler 16 wird das Licht 2 vorzugsweise unter Ausnutzung der Totalreflektion an die Fasern 4 weitergeleitet und auf diese verteilt.

Bedarfsweise können meburere Sammeleinrichtungen 10 eingesetzt werden, um über gemeinsame Fasern 4 bzw. Bündel 5 oder 6 oder getrennte Fasern 4 bzw. Bündel 5/6 das vorzugsweise in einem gemeinsamen Behälter bzw. Tank 8 befindliche Medium 3 mit Licht 2 zu versorgen.

Die Einrichtung 1 weist optional eine Einrichtung 11 zur Einleitung von Gas, das insbesondere Kohlendioxid enthält oder daraus besteht, auf. Beispielsweise kann zusätzlich zum Rauchwasser auch Rauchgas, Klärgas, Faulgas, Luft o. dgl. direkt eingeleitet werden. Beim Darstellungsbeispiel weist die Einrichtung 11 insbesondere einen Boden, ein Sieb 12 oder ein sonstiges geeignetes Einleitungsmittel auf, um das Gas insbesondere in Form von Gasblasen 13 in das Medium 3 einzuleiten bzw. abzugeben, wie in Fig. 2 schematisch angedeutet.

Die Gaszuleitung oder -einleitung erfolgt insbesondere bodenseitig und/oder in einer gewissen Tiefe, vorzugsweise von mindestens 5 bis 6 m, um einen guten Gasaustausch bzw. eine gute Versorgung des Mediums 3 und damit der Algen mit dem Gas zu ermöglichen.

Bedarfsweise wird das Gas oberhalb des Mediums 3 - beim Darstellungsbeispiel beispielsweise oberhalb der Abdeckung 9 oder innerhalb des Behälters bzw. Tanks 8 abgesaugt und wieder über die Einrichtung 11 zugeleitet, also rezirkuliert, um eine besonders gute Ausnutzung bzw. einen besonders guten Abbau des Gases, insbesondere des Kohlendioxids, zu erreichen.

Um die gewünschte Gasblasengröße zu erreichen bzw. deren Bildung zumindest zu unterstützen, erfolgt die Einleitung des Gases vorzugsweise in einer Tiefe von etwa 3 bis 50 m, vorzugsweise 5 bis 10 m, in das Medium 3.

Zur Formung der Gasblasen 13 bzw. Manipulation der Größen der Gasblasen 13 kann bedarfsweise das Sieb 12 oder dergleichen eingesetzt werden.

Dem Behälter oder Tank 8 bzw. dem Medium 3 ist vorzugsweise eine Umwälzeinrichtung, wie eine Umwälzpumpe, ein Rührwerk o. dgl., zugeordnet. So kann eine ausreichende und insbesondere das Wachstum fördernde Bewegung des Mediums 3 bzw. der Algensuspension sichergestellt werden.

Gemäß einer Ausführungsvariante werden wesentlich kleinere Gasblasen 13 gebildet. Der anfängliche Durchmesser der Gasblasen 13 beträgt beispielsweise 0,1 bis 10 µm, vorzugsweise weniger als 1 µm, insbesondere im wesentlichen 0,2 bis 0,6 µm.

Derartig kleine Gasblasen 13 können insbesondere durch Einleitung in einer entsprechenden Tiefe, beispielsweise etwa 50 m oder mehr, in das Medium 3 erfolgen. Alternativ oder zusätzlich kann das Medium 3 auch unter Druck gesetzt werden.

Besonders bevorzugt erfolgt die Einleitung des Gases bei einem Druck des Mediums 3 von etwa 50 bis 800 kPa. Besonders bevorzugt beträgt der Druck des Mediums 3, bei dem das Gas eingeleitet wird, mindestens etwa 500 kPa und mehr, um sehr kleine Gasblasen 13 zu bilden.

Aufgrund der geringen Größe der Gasblasen 13 ist es möglich, diese durch direkte Belichtung mit Licht, insbesondere Sonnenlicht, zu Resonanzabsorption anzuregen, so daß das Licht beim Aufsteigen der Gasblasen 13 ins Reaktorinnere bzw. nach oben durch das Medium 3 transportiert wird. Die Belichtung der Gasblasen 13 kann insbesondere wieder über Lichtleitfasern 4 und/oder auf sonstige Art und Weise erfolgen.

Es ist anzumerken, daß die Gasblasen 13 Resonatoren für das eingestrahlte Licht 2 bilden können. Die Resonanzfrequenzen hängen von dem Durchmesser der Gasblasen 13 ab. Um nicht nur monochromatisches Licht aufnehmen zu können, werden vorzugsweise Gasblasen 13 mit unterschiedlichen Durchmessern, insbesondere mit einem das zugeführte Lichtspektrum abdeckenden Durchmesserspektrum, erzeugt.

Bei den beschriebenen Ausführungsformen kann die Photosynthese mittels einer technischen Einrichtung nachgeahmt werden. Dementsprechend kann die vorschlagsgemäße Einrichtung 1 auch als Bioreaktor arbeiten bzw. bezeichnet werden.

Besonders bevorzugt kann die Algensuspension im gesamten Reaktorvolumen, also im gesamten Behälter 8, mittels der Fasertechnik beleuchtet werden. Insbesondere erfolgt dies dadurch, daß die Fasern 4 in unterschiedlichen Raumbereichen im Behälter 8 enden bzw. sich verzweigen, wie anhand der ersten Ausführungsform erläutert. Alternativ oder zusätzlich kann die räumliche Verteilung des Lichts 2 in dem Medium 3 auch mittels Gasblasen 13, insbesondere durch einen Nebel aus leuchtenden Bläschen erfolgen, wie anhand der zweiten Ausführungsform erläutert.

Damit wird eine dreidimensionale Beleuchtung erreicht. Bei herkömmliche Beleuchtung von einer Seite bzw, zumindest im wesentlichen nur aus einer Ebene wird wegen der hohen Schwächungskonstante der Algensuspension hingegen nur eine Zone von wenigen mm Eindringtiefe erreicht.

Es ist anzumerken, daß von dem Sonnenlicht bedarfsweise der IR-Anteil abgetrennt, und beispielsweise für sonstige Zwecke, insbesondere zur Trocknung der erzeugten Biomasse, wie der Algen, oder dergleichen, eingesetzt werden kann.

Wie bereits erwähnt, kann zusätzlich oder alternativ zu der Aussendung des Lichts an den Faserenden auch eine seitliche Abstrahlung erfolgen. Dies kann insbesondere durch entsprechend starke Krümmung der Fasern 4 erreicht werden. Bedarfsweise können die Fasern 4 dementsprechend auch stark gekrümmt, insbesondere gewendelt, in dem Medium 3 geführt sein oder verlaufen.

Die Einrichtung 1 bzw. deren Tank 8 ist vorzugsweise derart ausgebildet, das Medium bzw. Wasser 3, hier insbesondere die Algensuspension derart durchleitbar ist, daß eine derartige Umwälzung erfolgt, daß die Fotosynthese und/oder das Algenwachstum unterstützt wird bzw. werden.

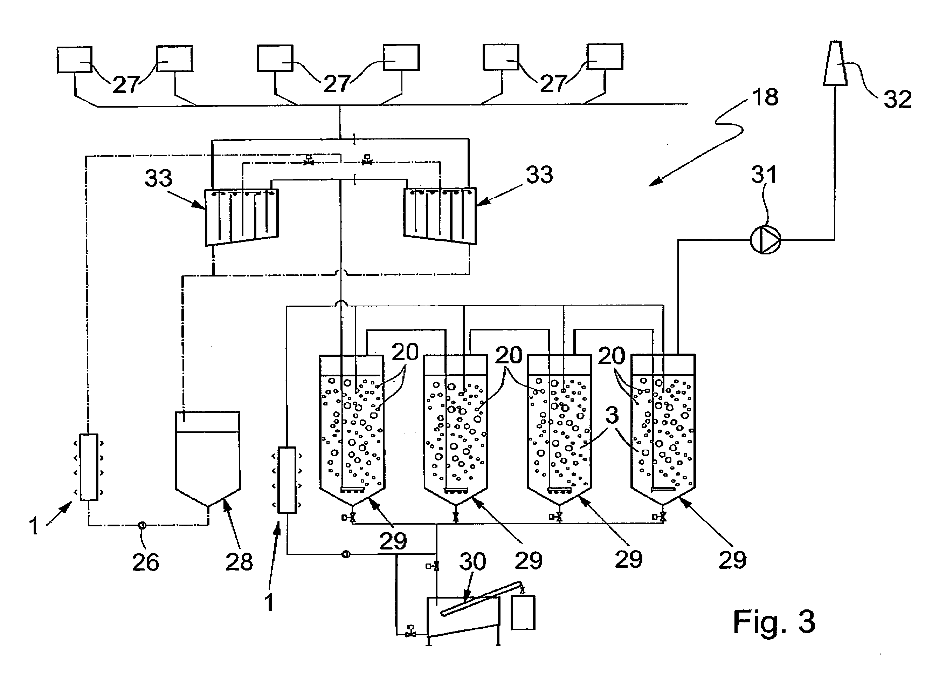

Fig. 3 zeigt in einer schematischen Darstellung eine weitere Ausführungsform der vorschlagsgemäßen Anordnung 18 zur Behandlung von Rauchgas 20 oder eines sonstigen Rohgases. Nachfolgend werden nur wesentliche Unterschiede gegenüber bereits beschriebener Ausführungsformen und -varianten erläutert, wobei die bisherigen Erklärungen, Aspekte und Merkmale insbesondere ergänzend oder entsprechend gelten.

Die Anordnung 18 kann wahlweise oder parallel an mehrere Rauchgasanlagen bzw. -erzeuger 27, wie Kraftwerkseinheiten, Verbrennungseinheiten, Brenner o. dgl., angeschlossen sein, wie in Fig. 3 angedeutet. Die Anordnung 18 dient dann der Behandlung, insbesondere Reinigung, des von den Rauchgasanlagen 27 abgegebenen Rauchgases 20 oder eines sonstigen Rohgases.

Beim Darstellungsbeispiel gemäß Fig. 3 weist die Anordnung 18 optional eine Vorbehandlung bzw. Vorreinigung auf, die insbesondere in der Art einer Kühlfalle wirken oder arbeiten kann. Besonders bevorzugt weist die Anordnung 18 mindestens einen oder mehrere Rauchgaskondensatoren 33 zum Kondensieren von insbesondere höherwertigen Kohlenwasserstoffen auf. Beim Darstellungsbeispiel sind die (zwei) Kondensatoren 33 parallel geschaltet und werden insbesondere abwechselnd betrieben.

Das Kondensat der Rauchgaskondensatoren 33 wird vorzugsweise in einem optionalen Reservoir 28 gesammelt bzw. gespeichert. Das Reservoir 28 ist mit einer Einrichtung 1 zum biologischen Abbau von kohlenstoffhaltigen Verbindungen und/oder geruchsbelästigenden Stoffen, wie bereits oben beschrieben, fluidisch verbunden. Insbesondere wird das in Fig. 3 nicht dargestellte Kondensat mittels der Einrichtung 1 gereinigt bzw. behandelt. Behandeltes bzw. gereinigtes Wasser aus der Einrichtung 1 wird vorzugsweise zur Reinigung bzw. zum Waschen der Kondensatoren 33 eingesetzt. Insbesondere wird ein Kondensator 33 gereinigt, während der andere Kondensator 33 in Betrieb ist und umgekehrt. Das behandelte bzw. gereinigte Wasser aus der Einrichtung 1 wird insbesondere über in Fig. 3 schematisch angedeutete Ventile, also wahlweise einem der beiden Kondensatoren 33 zugeleitet und insbesondere darin eingedüst, um diesen zu reinigen. Das durch einen Kondensator 33 geleitete Reinigungswasser wird vorzugsweise ebenfalls in dem Reservoir 28 gesammelt bzw. gespeichert und/oder von der Einrichtung 1 wieder gereinigt bzw, behandelt.

Bei der dargestellten Ausführungsform wird das Rohgas bzw. Rauchgas 20 durch den jeweiligen Kondensator 33 vorzugsweise meanderförmig oder in sonstiger geeigneter Weise geführt. Besonders bevorzugt ist der Kondensator 33 gekühlt, um ein weitgehendes Auskondensieren von Schadstoffen, höherwertigen Kohlenwasserstoffen oder dergleichen zu erreichen.

Die voranstehend beschriebene Reinigungsstufe bzw. Kondensationsstufe stellt eine Vorbehandlung oder Vorreinigung des Rohgases bzw. Rauchgases 20 dar.

Es ist anzumerken, daß insbesondere alkalische Reinigungsmittel dem Wasser 3 bzw. der Algensuspension bzw. dem Kondensat zugegeben werden können. Vorzugsweise werden derartige oder sonstige Reinigungsmittel in das Reservoir 28 zugegeben. Jedoch sind auch andere konstruktive Lösungen möglich.

Bei der vorschlagsgemäßen Anordnung 18 erfolgt vorzugsweise in Kombination mit der optionalen Vorbehandlung eine Nach- bzw. Hauptbehandlung oder Hauptreinigung des Rauchgases 20, besonders bevorzugt durch mindestens einen zusätzlichen Rauchgaswäscher 19 oder 29 und/oder durch Durchleiten von Rauchgas 20 bzw. sonstiger Abluft durch insbesondere eine lebende Spezies enthaltendes Wasser 3 bzw. eine Algensuspension.

Beim Darstellungsbeispiel weist die Anordnung 18 - insbesondere zur Hauptbehandlung bzw. Hauptreinigung - mindestens einen, vorzugsweise mehrere Rauchgaswäscher 29 auf, wobei das vorzugsweise vorbehandelte bzw. vorgereinigte Rauchgas bzw. Rohgas durch das Wasser 3 bzw. eine Algensuspension geleitet und dadurch gereinigt wird. Wie in Fig. 3 angedeutet, wird das Rauchgas dabei in einen Rauchgaswäscher 29 vorzugsweise in Form von Gasblasen oder als Gasblasenstrudel eingeleitet und insbesondere wieder (oben) gesammelt und vorzugsweise abgeleitet. Vorzugsweise wird das Rauchgas so nacheinander durch mehrere Rauchgaswäscher 29 geleitet. Es erfolgt also vorzugsweise eine mehrstufige Gaswäsche bzw. Hauptbehandlung. Beim Darstellungsbeispiel wird in einem Rauchgaswäscher 29 gereinigtes bzw. davon abgeleitetes Gas wieder in das Wasser 3 des nächsten Rauchgaswäschers 29 eingeleitet usw. Die Rauchgaswäscher 29 werden also seriell bzw. sequentiell von dem zu reinigenden Rauchgas durchströmt. Jedoch sind auch andere konstruktive Lösungen möglich.

Die Rauchgaswäscher 29 sind vorzugsweise an eine gemeinsame bzw. eigene, insbesondere wie bereits beschrieben aufgebaute Einrichtung 1 zum biologischen Abbau von kohlenstoffhaltigen Verbindungen und/oder geruchsbelästigenden Stoffen aus dem abgegebenen Rauchwasser angeschlossen. Insbesondere sind die Rauchgaswäscher 29 parallel an die Einrichtung 1 bzw. den Wasserkreislauf angeschlossen. Jedoch können die Rauchgaswäscher 29 auch seriell an die Einrichtung 1 bzw. den Wasserkreislauf angeschlossen sein. Der Begriff "Wasserkreislauf" umfasst jeweils vorzugsweise auch eine Zirkulation der Algensuspension oder dergleichen.

Vorzugsweise wird jeweils eine Algensuspension oder Wasser 3 mit einer sonstigen biologischen Spezies bei der Vorbehandlung und der Hauptbehandlung in einem separaten Kreislauf eingesetzt. Die beiden Kreisläufe können jedoch auch durch einen gemeinsamen Kreislauf, insbesondere mit einer gemeinsamen oder mehreren gemeinsamen, beispielsweise parallel oder sequentiell durchströmten Einrichtungen 1 gebildet sein.

Bei der Ausführungsform gemäß Fig. 3 erfolgt die Lichtzuführung bei der der Vorbehandlung und/oder Hauptbehandlung zugeordneten Einrichtung 1 vorzugsweise durch seitliche Einstrahlung, wie durch entsprechende Pfeile in Fig. 3 angedeutet. Jedoch sind auch andere konstruktive Lösungen, wie bereits insbesondere anhand von Fig. 2 erläutert, möglich.

Die lebende Spezies bzw. Algen werden dem zirkulierenden Wasser 3 zumindest partiell entnommen. Dies kann beispielsweise durch Abfiltern oder eine sonstige Separation erfolgen. Beispielhaft ist dies für den Kreislauf der Hauptreinigung in Fig. 3 angedeutet. Das Wasser 3 bzw. die Algensuspension bzw. ein Teilstrom davon ist hier zumindest bedarfsweise, diskontinuierlich oder kontinuierlich durch eine Separationseinrichtung, wie eine Filtereinrichtung 30 leitbar. Jedoch sind hier auch andere konstruktive oder verfahrensmäßige Lösungen möglich.

Das gereinigte Gas wird vorzugsweise durch einen Ventilator 31 zu einem optionalen Kamin 32 oder sonstigen Auslaß o. dgl. geleitet. Alternativ oder ergänzend kann auch eine sonstige Nachbehandlung erfolgen.

Vorzugsweise wird das Rauchgas bzw. Rohgas bzw. die Abluft mittels des Ventilators 31 durch die Vorbehandlung und Hauptbehandlung bzw, die Kondensatoren 33 und/oder Rauchgaswäscher 29 gepumpt bzw. gesaugt. Jedoch sind auch andere konstruktive Lösungen möglich. Insbesondere können anstelle eines gemeinsamen oder einzigen Ventilators 31 auch mehrere Ventilatoren o. dgl. eingesetzt werden.

Es ist anzumerken, daß die einzelnen Rauchgaswäscher 19 und 29 vorzugsweise individuell abschaltbar bzw. absperrbar sind, insbesondere zu Reinigungs- oder sonstigen Wartungszwecken.

Einzelne Merkmale und Aspekte der beschriebenen Ausführungsformen und -varianten können auch beliebig miteinander kombiniert werden, aber auch unabhängig voneinander realisiert werden.

Es werden eine Anordnung und ein Verfahren zur Behandlung von Rauchgas sowie Verwendungen von Algen vorgeschlagen. In das Rauchgas wird eine Algensuspension mit lebenden Algen eingesprüht und durch einen Bioreaktor zirkuliert. In dem Bioreaktor erfolgt unter Einwirkung von Licht eine Fotosynthese, wobei insbesondere höherwertige Kohlenwasserstoffe und/oder geruchsbelästigende Stoffe abgebaut werden. Alternativ oder zusätzlich wird das Rauchgas durch die Algensuspension geleitet.

Versuche haben gezeigt, daß die Algen auch sehr gut zum biologischen Abbau von geruchsbelästigenden Stoffen in Gülle verwendet werden können. Die Gülle wird mittels Algen unter Einwirkung von Licht biologisch gereinigt bzw. behandelt. Insbesondere werden geruchsbelästigende Stoffe in der Gülle mittels Algen unter Einwirkung von Licht biologisch abgebaut. Dies kann beispielsweise dadurch erfolgen, daß die Gülle in die Einrichtung 1 eingeleitet und/oder mit Algen oder einer Algensuspension versetzt bzw. gemischt wird oder einer Algensuspension zugemischt bzw. zudosiert wird. Überraschenderweise hat sich gezeigt, daß die Algen in äußerst kurzer Zeit die geruchsbelästigenden Stoffe zumindest sehr weitgehend entfernen, binden und/oder abbauen können, so daß schon nach sehr kurzer Zeit quasi keine Geruchsbelfistigung mehr vorhanden ist, die so behandelte Gülle also ohne besondere Maßnahmen, insbesondere offen, weiter verarbeitet, gelagert oder beispielsweise auf ein Feld ausgebracht werden kann.

## Patentansprüche

1. Anordnung (18) zur Behandlung von Rauchgas (20),
mit einem Rauchgaswäscher (19) zum Einsprühen von Wasser (3) in das Rauchgas (20) oder mit einem Rauchgaskondensator (33) und
mit einer Einrichtung (1) zum biologischen Abbau von kohlenstoffhaltigen Verbindungen und/oder geruchsbelästigenden Stoffen aus dem vom Rauchgaswäscher (19) abgegebenen Wasser (3) oder aus vom Rauchgaskondensator (33) abgegebenem Kondensat.

2. Anordnung nach Anspruch 1, **dadurch gekennzeichnet, daß** die Einrichtung (1) und/oder das Wasser (3) mindestens eine biologisch aktive Spezies, insbesondere Algen, enthält.

3. Anordnung nach-Anspruch 2, **dadurch gekennzeichnet, daß** die Anordnung (18) so ausgebildet ist, daß die biologisch aktive Spezies zusammen mit dem Wasser (3) in das Rauchgas (20) eingesprüht wird.

4. Anordnung nach einem der voranstehenden Ansprüche, **dadurch gekennzeichnet, daß** die Anordnung (18) einen dem Rauchkondensator (33) nachgeordneten Rauchgaswäscher (29), insbesondere zum Durchleiten von Rauchgas (20) durch Wasser (3), aufweist.

5. Anordnung nach einem der voranstehenden Ansprüche, **dadurch gekennzeichnet, daß** die Anordnung (18) mehrere Rauchgaswäscher (19, 29) aufweist, durch die das Rauchgas (20) nacheinander leitbar ist.

6. Anordnung nach Anspruch 5, **dadurch gekennzeichnet, daß** die Rauchgaswäscher (19, 29) parallel oder seriell an die Einrichtung (1) angeschlossen sind.

7. Anordnung nach einem der voranstehenden Ansprüche, **dadurch gekennzeichnet, daß** die Anordnung (18) so ausgebildet ist, daß das Wasser (3) durch den Rauchgaswäscher (19, 29) und die Einrichtung (1) in einem Kreislauf zirkulierbar ist.

8. Anordnung nach einem der voranstehenden Ansprüche, **dadurch gekennzeichnet, daß** die Einrichtung (1) Mittel, insbesondere lichtleitende Fasern (4), zur Zuleitung von Licht (2), insbesondere Sonnenlicht, aufweist.

9. Verfahren zur Behandlung von Rauchgas (20), wobei eine Algensuspension mit lebenden Algen in das Rauchgas (20) eingesprüht wird.

10. Verfahren nach Anspruch 9, **dadurch gekennzeichnet, daß** in die Algensuspension Licht (2), insbesondere Sonnenlicht, eingeleitet wird, um den biologischen Abbau von kohlenstoffhaltigen Verbindungen zu ermöglichen und/oder zu unterstützen.

11. Verfahren nach Anspruch 9 oder 10, **dadurch gekennzeichnet, daß** die Algensuspension in einem Kreislauf zirkuliert wird.

12. Verwendung von Algen bei einem Rauchgaswäscher (19, 29) oder Rauchgaskondensator (33) zum biologischen Abbau von kohlenstoffhaltigen Verbindungen und/oder von geruchsbelästigenden Stoffen aus vom Rauchgaswäscher (19, 29) abgegebenem Wasser (3) oder aus vom Rauchgaskondensator (33) abgegebenem Kondensat, wobei das Wasser (3) bzw. Kondensat mittels Algen unter Einwirkung von Licht (2) biologisch gereinigt wird.

13. Verwendung nach Anspruch 12, **dadurch gekennzeichnet, daß** zuerst das Rauchgas (20) durch den Rauchgaskondensator (33) und danach durch den Rauchgaswäscher (29) geleitet wird.

14. Verwendung nach Anspruch 12 oder 13, **dadurch gekennzeichnet, daß** eine mehrstufige Rauchgaswäsche erfolgt.

15. Verwendung von Algen zum biologischen Abbau von geruchsbelästigenden Stoffen in Gülle, wobei die Gülle mittels Algen unter Einwirkung von Licht (2) biologisch gereinigt oder behandelt wird und/oder geruchsbelästigende Stoffe in der Gülle mittels Algen unter Einwirkung von Licht (2) biologisch abgebaut werden.
